Europäisches Patentamt

European Patent Office

Office européen des brevets

(19)

(11) Numéro de publication: **0 029 385**
**B1**

(12)

# FASCICULE DE BREVET EUROPEEN

(45) Date de publication du fascicule du brevet: **15.02.84**

(51) Int. Cl.³: **F 02 D 1/06, F 02 D 1/12, F 02 D 23/02**

(21) Numéro de dépôt: **80401597.2**

(22) Date de dépôt: **07.11.80**

(54) Dispositif de régulation de débit de carburant pour moteur suralimenté.

(30) Priorité: **15.11.79 FR 7928257**

(43) Date de publication de la demande:
**27.05.81 Bulletin 81/21**

(45) Mention de la délivrance du brevet:
**15.02.84 Bulletin 84/7**

(84) Etats contractants désignés:
**AT BE CH DE GB IT LI LU NL SE**

(56) Documents cités:
**FR - A - 1 131 463**
**FR - A - 1 407 678**
**FR - A - 2 362 280**
**GB - A - 537 028**
**GB - A - 615 517**
**GB - A - 1 271 656**
**US - A - 2 374 411**
**US - A - 2 383 979**

(73) Titulaire: **RENAULT SPORT**
**1/15, Avenue du Président Kennedy**
**F-91170 Viry-Chatillon (FR)**

(72) Inventeur: **Boudy, Jean-Pierre**
**2, rue des Pätys**
**F-91540 Mennecy (FR)**

(74) Mandataire: **Réal, Jacques et al,**
**8 & 10, avenue Emile Zola**
**F-92109 Boulogne-Billancourt (FR)**

Courier Press, Leamington Spa, England.

Dispositif de régulation de débit de carburant pour moteur suralimenté

L'invention concerne un dispositif de régulation de débit de carburant pour moteur suralimenté, du type comportant une pompe à injection dont le point mort bas des pistons d'injection est déterminé par une butée mobile positionnée par une came tridimensionnelle déplaçable en translation axiale et en rotation, l'un de ces déplacements étant commandé par un dispositif de mesure du débit d'air admis dans le moteur et l'autre par un dispositif tachymétrique en fonction de la vitesse de rotation du moteur.

Le brevet FR A 2 362 280 décrit un dispositif de ce type pour moteur Diesel suralimenté dans lequel la mesure de la pression $P_2$ dans la tubulure d'admission est utilisée pour traduire le débit d'air du moteur.

Si un tel dispositif convient pour les moteurs Diesel suralimentés, il n'est pas transposable aux moteurs à allumage commandé suralimentés dans lesquels la pression d'admission $P_2$ n'est pas représentative du débit d'air du moteur qui, en raison de la présence d'un papillon, varie dans des proportions beaucoup plus considérables que dans les moteurs Diesel.

Or, dans un moteur à allumage commandé, une bonne mesure du débit d'air du moteur est indispensable pour obtenir à tout instant la richesse voulue nécessaire au fonctionnement optimal du moteur.

Le brevet GB A 615 517 décrit un dispositif de régulation de débit de carburant qui tente d'apporter une solution à ce problème. Ce dispositif comprend deux pistons à actionnement hydraulique dont l'un est piloté en fonction de la vitesse de rotation du moteur et l'autre en fonction des paramètres pression d'admission, pression d'échappement et température de l'air à l'admission. Les déplacements des deux pistons sont combinés ay moyen d'une liaison à crémaillère et tringlerie pour déplacer une tige de commande qui fait varier le débit de carburant. Toutefois, il s'agit là d'une solution complexe nécessitant la présence d'une source de pression hydraulique et dont la liaison par crémaillère et tringlerie entre les pistons ne peut pas offrir dans toutes les conditions de fonctionnement du moteur la même précision qu'une came tridimensionnelle programmée suivant trois dimensions.

On connaît enfin, notamment par les brevets FR A 1 131 463 et GB A 1 271 656, des dispositifs de régulation de débit de carburant à came tridimensionnelle pour moteurs à allumage commandé dans lesquels l'un des déplacements de la came est fonction de la vitesse de rotation du moteur et l'autre déplacement dépend de la position du papillon. Toutefois, ces dispositifs impliquent une liaison entre la came et le papillon entraînant une dureté inacceptable de la pédale d'accélérateur.

L'invention vise à réaliser un dispositif de régulation de débit de carburant à came tridimensionnelle qui ne comporte pas de liaison mécanique entre la came et le papillon pour éviter l'inconvénient mentionné ci-dessus et qui prenne en compte de façon précise le débit d'air du moteur pour assurer à tout instant le bon dosage du rapport air/essence que requiert un moteur suralimenté à allumage commandé.

A cet effet, l'invention a pour objet un dispositif de régulation de débit de carburant du type précité pour moteur suralimenté à allumage commandé dans lequel le dispositif de mesure du débit d'air comprend un premier piston équilibré entre deux ressorts et soumis d'un côté à la pression de suralimentation et de l'autre à la pression atmosphérique, et un second piston, solidaire du premier, de diamètre réduit dans un certain rapport $\alpha$ par rapport au premier piston et soumis d'un côté à la pression d'échappement $P_3$ agissant dans le sens antagoniste de la pression de suralimentation $P_2$ et de l'autre à la pression atmosphérique, lesdits pistons commandant le déplacement correspondant de la came suivant une loi de la forme $P_2 - \alpha P_3$.

D'autres particularités de l'invention apparaîtront dans la description qui va suivre d'un mode de réalisation pris comme exemple et représenté sur le dessin annexé sur lequel:

— la figure 1 est une vue schématique d'ensemble du dispositif;

— la figure 2 une coupe partielle du piston différentiel.

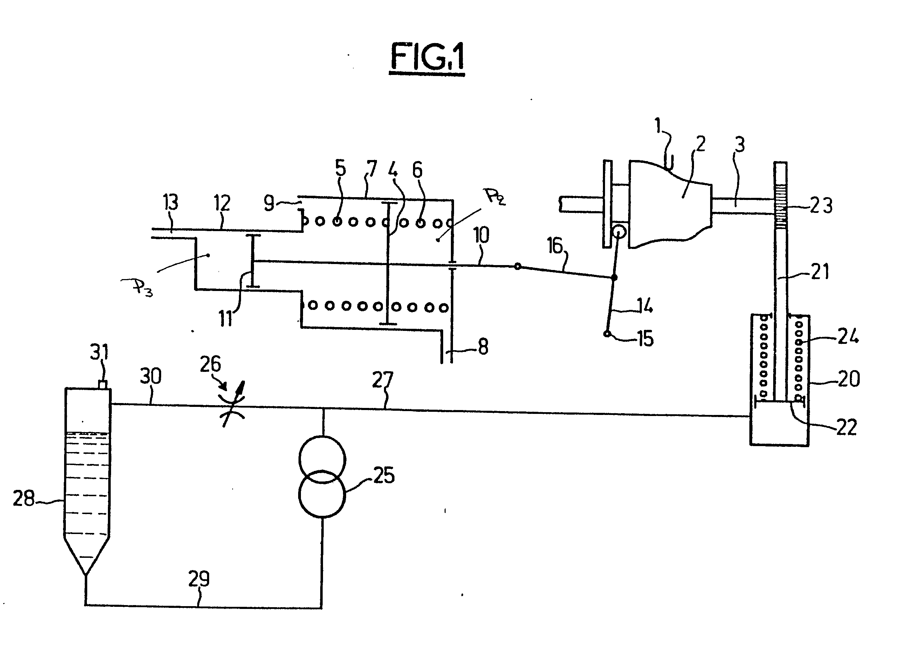

La pompe à injection, de type habituel, n'a pas été représentée sur la figure 1, de même que son mécanisme de buté de point mort bas limitant la course d'injection. Seul a été représenté le poussoir de came 1 actionnant ce mécanisme en étant actionné lui-même de la manière usuelle par une came tridimensionnelle 2 ou camoïde qui est clavetée coulissante sur un arbre 3 de manière à pouvoir tourner avec cet arbre et se déplacer en translation le long de cet arbre, ces deux composantes de déplacement étant commandées indépendamment.

Dans la disposition habituelle le déplacement axial est commandé par une tringlerie à partir de la commande du papillon des gaz, c'est-à-dire en définitive de l'accélérateur, tandis que la rotation est commandée par un piston équilibré entre deux ressorts et soumis surune face à la pression de suralimentation et sur l'autre face à la pression atmosphérique. De cette manière, lorsque le turbocompresseur entre en service, ce piston provoque la rotation du camoïde ce qui produit l'adaptation du débit de carburant à l'augmentation du débit d'air résultant de cette suralimentation.

Dans le dispositif selon l'invention on a également un piston 4 équilibré entre deux ressorts de poussée antagonistes 5 et 6 et qui se déplace dans un cylindre 7 réuni d'un côté par 8 à la pression de suralimentation et de l'autre côté par 9 à la pression atmosphérique. Par contre, conformément à l'invention, on lui adjoint sur la même tige 10 un second piston 11 d'une section inférieure à celle du piston 4 en fonction d'un certain rapport de réduction, de l'ordre de 0,45. D'autre part, ce piston 11 se déplace dans un cylindre approprié 12 débouchant dans le cylindre 7 et dont la chambre extrême communique par 13 avec la pression d'échappement. Cette pression agit donc dans le sens antagoniste de la pression de suralimentation, tandis que l'autre chambre du cylindre 12 communique naturellement avec la pression atmosphérique, toujours par 9.

La force agissant sur la tige 10, et par conséquent la position d'équilibre de cette tige qui en résulte sous l'effet des ressorts 5 et 6, n'est donc pas fonction uniquement de la pression de suralimentation, et n'est pas non plus fonction directe de la différence entre la pression de suralimentation et la pression d'échappement, mais se trouve proportionnelle à une fonction de la forme $P2 - \alpha P3$, dans laquelle $\alpha$ est le rapport de réduction indiqué plus haut, de l'ordre de grandeur de 0,45 P2 est la pression de suralimentation immédiatement en amont des soupapes d'admission dans le collecteur d'admission et P3 la pression d'échappement immédiatement en aval des soupapes d'échappement dans le collecteur d'échappement.

D'autre part, cette tige 10 agit non sur la rotation du camoïde 2 mais de préférence sur sa translation axiale par le mécanisme connu comportant un doigt de manoeuvre 14 oscillant autour d'un axe 15 et commandé par une biellette 16.

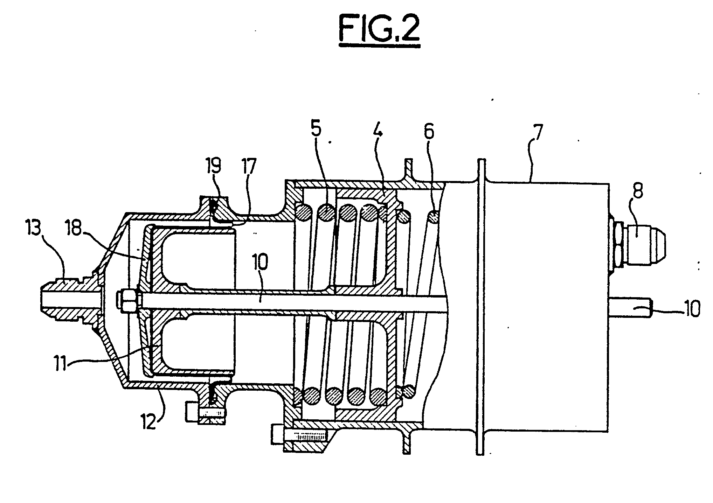

Dans cette réalisation il faut prendre soin d'éviter tout défaut d'étanchéité entre le piston 11 et son cylindre 12 faute de quoi la fuite de gaz d'échappement qui en résulterait provoquerait une élévation de température anormale du mécanisme. Pour éviter cela, et comme représenté sur la fig. 2, on utilise conformément à l'invention un piston 11 du type à membrane comportant une membrane souple 17 pincée par un disque 18 sur la tête du piston 11, et pincée d'autre part par sa périphérie plane 19 dans un plan de joint entre les deux parties du cylindre 12. Cette membrane roule sur elle-même et se retourne d'une manière connue lors des déplacements du piston tout en empêchant toute fuite de gaz. Il en résulte que la transmission de la pression des gaz d'échappement à la chambre amont du cylindre 12 par le conduit 13 se fait à l'aide d'un ballast d'air ou de gaz qui ne circule pas et qui de ce fait prend une température d'équilibre relativement basse.

Par ailleurs, le mouvement de rotation du camoïde est obtenu en entraînant l'arbre 3 en rotation par un dispositif tachymétrique en fonction de la vitesse réelle du moteur. Tout dispositif tachymétrique peut être utilisé, mais il est préférable selon l'invention d'utiliser un dispositif hydraulique comportant un vérin 20 dont la tige 21 de son piston 22 constitue une crémaillère entraînant un pignon 23 calé sur l'extrémité de l'arbre 3. La chambre inférieure de ce vérin est soumise à une pression hydraulique proportionnelle à la vitesse du moteur tandis que la chambre supérieure contient un ressort de rappel 24.

Cette pression hydraulique proportionnelle à la vitesse du moteur est engendrée d'une manière connue à l'aide d'une pompe volumétrique 25 entraînée par le moteur, par exemple à une vitesse moitié de celle du vilebrequin, et refoulant le liquide aspiré à travers un étranglement réglable 26, la pression ainsi obtenue entre la pompe 25 et l'étranglement 26 étant transmise par une canalisation 27 au vérin 20.

En particulier, le liquide utilisé peut être le liquide de refroidissement du moteur en puisant celui-ci dans le vase d'expansion 28 du radiateur du moteur par une canalisation 29, tandis que le débouché de l'étranglement 26 ramène la fuite de liquide par 30 dans ce vase d'expansion. Pour faciliter cette utilisation il est préférable de rajouter dans l'eau de refroidissement du moteur un additif extrême pression de type connu de manière à augmenter la viscosité du liquide à une valeur variant peu avec la température.

Naturellement il est souhaitable également pour le vérin 20 d'éviter toute fuite du liquide de refroidissement et celui-ci peut également être constitué par un piston à membrane.

Enfin, il faut veiller à éviter que la pression d'ensemble du circuit de refroidissement prenne une valeur très supérieure à la pression atmosphérique qui viendrait de ce fait s'ajouter en permanence à celle due à la vitesse du moteur et fausserait alors la position de la crémaillère 21. Pour cela on utilise un régulateur de pression de type connu, schématisé en 31 sur la figure 1, et limitant à une valeur constante, de 1,5 bar par exemple, la pression interne du circuit de refroidissement.

L'invention, grâce à la correction pneumatique différentielle et à la correction tachymétrique exacte, permet une meilleure adaptation en richesse en toutes circonstances de fonctionnement du moteur. De plus, l'absence de liaison entre le papillon des gaz et la pompe à injection élimine les problèmes de dureté de l'accélérateur et également les imprécisions de commande de la translation de la came. La tringlerie s'en trouve naturellement très simplifiée. Enfin, le dispositif permet également de tenir compte du contre balayage du moteur en accélération, qui sur un moteur turbocompressé n'est pas le même selon les circonstances de cette accélération.

De cette meilleure adaptation de la richesse en toutes circonstances il résulte une amélioration des performances et une diminution de la consommation.

## Revendications

1. Dispositif de régulation de débit de carburant pour moteur suralimenté, du type comportant une pompe à injection dont le point mort bas des pistons d'injection est déterminé par une butée mobile (1) positionnée par une came tridimensionnelle (2) déplaçable en translation axiale et en rotation, l'un desdits déplacements étant commandé par un dispositif (4—13) de mesure du débit d'air admis dans le moteur et l'autre par un dispositif tachymétrique (20—25) en fonction de la vitesse de rotation du moteur, caractérisé en ce que, le moteur suralimenté est à allumage commandé, et que le dispositif de mesure du débit d'air comprend un premier piston (4) équilibré entre deux ressorts (5, 6) et soumis d'un côté à la pression de suralimentation ($P_2$) et de l'autre à la pression atmosphérique, et un second piston (11), solidaire du premier (4), de diamètre réduit dans un certain rapport ($\alpha$) par rapport au premier piston (4) et soumis d'un côté à la pression d'échappement ($P_3$) agissant dans le sens antagoniste de la pression de suralimentation ($P_2$) et de l'autre à la pression atmosphérique, lesdits pistons commandant le déplacement correspondant de la came (2) suivant une loi de la forme $P_2 - \alpha P_3$.

2. Dispositif selon la revendication 1, caractérisé en ce que, comme connu en soi, l'ensemble de commande pneumatique différentiel comportant lesdits premier (4) et second pistons (11) agit sur la translation axiale de la came tridimensionnelle (2), tandis que le dispositif tachymétrique (20—25) agit sur sa rotation.

3. Dispositif selon l'une quelconque des revendications 1 et 2, caractérisé par le fait que ledit deuxième piston (11) soumis à la pression des gaz d'échappement est un piston du type à membrane.

4. Dispositif selon l'une quelconque des revendications 2 et 3, caractérisé par le fait que le dispositif tachymétrique comporte un vérin hydraulique (20) à ressort de rappel (24) agissant par pignon (23) et crémaillère (21) et dont la pression hydraulique de commande est élaborée par une pompe volumétrique (25) entraînée par le moteur et comportant un étranglement réglable (26) du côté refoulement.

5. Dispositif selon la revendication 4, caractérisé par le fait que le liquide dudit circuit hydraulique est le liquide de refroidissement du moteur prélevé et refoulé dans le vase d'expansion (28) de ce circuit de refroidissement.

6. Dispositif selon la revendication 5, caractérisé par le fait que ledit liquide est de l'eau additionnée d'un additif extrême pression de type connu.

7. Dispositif selon une des revendications 5 et 6, caractérisé par le fait que ledit vase d'expansion (28) du liquide de refroidissement comporte un régulateur de pression taré à une valeur constante, de préférence de l'ordre de 1,5 bar.

## Patentansprüche

1. Vorrichtung zur Kraftstoffmengenregelung für einen aufgeladenen Motor, mit einer Einspritzpumpe, wobei der untere Totpunkt der Einspritzkolben durch einen beweglichen Anschlag (1) bestimmt wird, der durch einen dreidimensionalen Nocken (2) eingestellt wird, der sowohl eine Axialbewegung als auch eine Rotationsbewegung ausführen kann, wobei eine der Bewegungen von einer Meßanordnung (4—13) für die dem Motor zugeführte Luftmenge gesteuert wird und die andere Bewegung von einer Drehzahlmeßanordnung (20—25) als Funktion der Umdrehungsgeschwindigkeit des Motors gesteuert wird, dadurch gekennzeichnet, daß der aufgeladene Motor ein Motor mit gesteuerter Zündung ist und daß die Meßanordnung für die Luftmenge einen ersten Kolben (4) aufweist, der zwischen zwei Federn (5, 6) ausbalanciert ist und an einer Seite mit dem Aufladungsdruck $P_2$ beaufschlagt wird und an der anderen Seite mit dem atmosphärischen Druck beaufschlagt wird und einen zweiten Kolben (11) aufweist, der mit dem ersten Kolben (4) fest verbunden ist und einen in einem bestimmten Verhältnis $\alpha$ bezüglich des ersten Kolbens verringerten Durchmesser aufweist und dessen eine Seite mit dem Auslaßdruck $P_3$ beaufschlagt wird, der dem Aufladungsdruck $P_2$ entgegenwirkt und dessen andere Seite mit dem atmosphärischen Druck beaufschlagt wird, wobei die Kolben die entsprechende Verschiebung des Nockens (2) gemäß der Formel $P_2 - \alpha P_3$ steuern.

2. Vorrichtung nach Anspruch 1, dadurch gekennzeichnet, daß in bekannter Weise die pneumatische differentielle Steueranordnung mit dem ersten Kolben (4) und dem zweiten Kolben (11) auf die Axialbewegung des dreidimensionalen Nockens (2) einwirkt, während die Drehzahlmeßanordnung (20—25) auf die Drehbewegung einwirkt.

3. Vorrichtung nach einem der Ansprüche 1 und 2, dadurch gekennzeichnet, daß der zweite mit dem Auslaßdruck beaufschlagte Kolben (11) ein Membrankolben ist.

4. Vorrichtung nach einem der Ansprüche 2 und 3, dadurch gekennzeichnet, daß die Drehzahlmeßanordnung einen hydraulischen Druckzylinder (20) mit einer Rückholfeder (24) aufweist, die über ein Ritzel (23) und eine Zahnstange (21) wirksam ist und deren hydraulischer Steuerdruck von einer Volumenpumpe (25) erzeugt wird, die vom Motor angetrieben ist und eine einstellbare Drosselklappe (26) auf der Rücklaufseite aufweist.

5. Vorrichtung nach Anspruch 4, dadurch gekennzeichnet, daß die Flüssigkeit des hydraulischen Kreislaufs die Kühlflüssigkeit des Motors ist, die vom Ausdehnungsgefäß (28) des Kühlkreislaufes abgenommen und diesem wieder zugeführt wird.

6. Vorrichtung nach Anspruch 5, dadurch gekennzeichnet, daß die Flüssigkeit Wasser ist, dem ein bekanntes Druckerhöhungsadditiv zugefügt ist.

7. Vorrichtung nach einem der Ansprüche 5 und 6, dadurch gekennzeichnet, daß das Ausdehnungsgefäß (28) für die Kühlflüssigkeit einen Druckregler aufweist, der auf einem konstanten Wert vorzugsweise in der Größenordnung von 1,5 bar eingestellt ist.

**Claims**

1. An apparatus for regulating the fuel flow rate for a supercharged engine, of the type comprising an injection pump in which the bottom dead centre position of the injection pistons is determined by a movable stop means (1) positioned by a three-dimensional cam (2) which is displaceable with an axial translatory movement and a rotary movement, one of said displacements being controlled by a means (4—13) for measuring the flow of intake air into the engine and the other being controlled by a tachometric means (20—25) in dependence on the speed of rotation of the engine, characterised in that the supercharged engine is of controlled ignition type and that the air flow measuring means comprises a first piston (4) which is balanced between two springs (5, 6) and which is subjected on one side to the supercharging pressure $(P_2)$ and on the other side, to atmospheric pressure, and a second piston (11) which is fixed with respect to the first piston (4) and which is of a reduced diameter in a certain ratio $(\alpha)$ with respect to the first piston (4) and which is subjected on one side to the exhaust pressure $(P_3)$ acting in the opposite direction to the supercharging pressure $(P_2)$, and on the other side, to atmospheric pressure, said pistons controlling the corresponding displacement of the cam (2) in accordance with a law in the form $P_2—\alpha P_3$.

2. Apparatus according to claim 1 characterised in that, as is known per se, the differential pneumatic control assembly comprising said first and second pistons (4, 11) acts on the axial translatory movement of the three-dimensional cam (2) while the tachometric means (20—25) acts on the rotary movement of the cam.

3. Apparatus according to either one of claims 1 and 2 characterised in that said second piston (11) which is subjected to the pressure of the exhaust gases is a piston of diaphragm type.

4. Apparatus according to either one of claims 2 and 3 characterised in that the tachometric means comprises a hydraulic jack (20) with a return spring (24), which acts by way of a rack (21) and a pinion (23) and the hydraulic actuating pressure of which is produced by a displacement pump (25) driven by the engine and comprising a controllable constriction (26) on the discharge side.

5. Apparatus according to claim 4 characterised in that the liquid of said hydraulic circuit is the engine cooling liquid which is taken from and discharged into the expansion chamber (28) of the cooling circuit.

6. Apparatus according to claim 5 characterised in that said liquid is water to which an extreme pressure additive of known type is added.

7. Apparatus according to one of claims 5 and 6 characterised in that said expansion chamber (28) for the cooling liquid comprises a pressure regulator which is calibrated at a constant value, preferably of the order of 1.5 bar.

# FIG.1

0029385

# FIG.2